(19) **Europäisches Patentamt**

**European Patent Office**

**Office européen des brevets**

(11) **EP 1 296 126 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*G01M 15/00* *(2006.01)*　　*G10K 11/00* *(2006.01)*
*G01H 1/00* *(2006.01)*　　*G01H 3/00* *(2006.01)*

(21) Anmeldenummer: **02019963.4**

(22) Anmeldetag: **05.09.2002**

(54) **Verfahren zur Bestimmung des Körperschall- und des Luftschallanteils eines Motorengeräusches**

Method for determining solid-borne and air-borne portions of engine noise

Procédé de détermination du bruit de moteur formé par le bruit de structure et par le bruit aérien

(84) Benannte Vertragsstaaten:
**DE FR GB**

(30) Priorität: **19.09.2001 DE 10146121**

(43) Veröffentlichungstag der Anmeldung:
**26.03.2003 Patentblatt 2003/13**

(73) Patentinhaber: **Ford Global Technologies, LLC**
**Dearborn, MI 48126 (US)**

(72) Erfinder: **Raida, Hans Joachim**
**50735 Köln (DE)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) Entgegenhaltungen:
**EP-A2- 0 470 064　　DE-A1- 4 033 402**
**DE-A1- 19 911 335　　DE-A1- 19 951 650**
**DE-U1- 7 929 637　　GB-A- 2 271 387**

EP 1 296 126 B1

**Beschreibung**

Gegenstand der Erfindung ist ein Verfahren zur quantitativen Bestimmung des Luft- bzw. Körperschallanteils eines Motorengeräusches, wie es z. B. im Fahrzeuginnenraum von Kraft- oder Elektrofahrzeugen zu hören ist. Das Verfahren kann auch bei anderen Fortbewegungsmitteln (z. B. Schiffen, Flugzeuge) sowie Kraftwerken, Maschinenhallen etc. angewendet werden.

DE 199 11 335 A1 betrifft eine Vorrichtung zur Einstellung von Motorgeräuschen im Innenraum eines kraftfahrzeuges, umfassend mindestens einen einem Kraftfahrzeugmotor zugeordneten Körperschall-Sensor und/oder einen Luftschallsensor, eine Programmierbare Bandpaß-Filterereinrichtung und mindestens einen Lautsprecher.

Der Körper- bzw. Luftschallanteil des Motorengeräusches, wie es im Fahrzeuginnenraum gehört wird, läßt sich derzeit nur sehr aufwendig bestimmen. In einem Aufsatz "Geräuschpfadanalyse einmal anders" zur 3. Fahrzeugakustik-Tagung "Geräuschminderung in Kraftfahrzeugen" vom 10./11.3.1992 im Haus der Technik e. V., Essen, werden zwei grundlegende Verfahren beschrieben. Beim ersten Verfahren wird der Antriebsstrang schwingungstechnisch vom Fahrzeug teilweise oder sogar vollständig entkoppelt, so daß das Fahrzeuginnenraumgeräusch nur noch durch den Luftschallanteil des Motorengeräusches bestimmt wird. Zu diesem Zweck müssen jedoch aufwendige Stahlgestelle gebaut werden, in die der gesamte Antriebsstrang eingehängt wird. Problematisch ist dabei insbesondere die Entkopplung der Antriebswellen.

Daneben existiert ein indirektes Verfahren, bei dem zunächst möglichst genaue Messungen der Körper- und Luftschall-Übertragungsfunktionen durchgeführt werden, die auch unter dem Namen "Transferpfad-Analyse" (engl. "Noise Path Analysis") bekannt sind. Danach werden die motorseitigen Beschleunigungen und das vom Motor abgestrahlte Geräusch gemessen. Aufgrund der in weiten Bereichen linearen Überlagerung der Signale können Aussagen über den Luft- und Körperschallanteil getroffen werden. Die Genauigkeit der Aussagen ist jedoch frequenzabhängig, da insbesondere bei tiefen und hohen Frequenzen die Körperschall-Transferfunktionen ungenau sind. Bei tiefen Frequenzen kann nicht ausreichend angeregt werden, wodurch sich die Kohärenz verschlechtert, während bei hohen Frequenzen die Phase nur ungenau gemessen werden kann. Zudem ändern sich die Transferfunktionen auch mit der Temperatur (temperaturabhängige Elastizität der Gummilagerungen) sowie der Motorlast (Verspannung der Motorlager, z.B. Vollastbeschleunigungen bei niedrigen Drehzahlen).

Ebenfalls problematisch ist die genaue Messung der Luftschallemissionen des Motors. Solche Messungen werden im akustischen Nahfeld des Motors ausgeführt, wodurch der Schalldruck zwischen zwei benachbarten Punkten stark variieren kann. Die vollständige und korrekte meßtechnische Erfassung des abgestrahlten Motorgeräusches ist daher praktisch nicht möglich. In der Regel wird aus Praktikabilitätggründen pro Motorseite lediglich ein Mikrofon zur Aufzeichnung des Motorgeräusches verwendet.

Bekannt sind Verfahren, bei denen durch die Verwendung von gasförmigen Medien, d.h. von Luft verschiedenen Gasen, akustische Effekte erzielt und genutzt werden. Zur Beeinflussung der Akustik bei Flugzeugen werden z. B. "leichte" Gase, d.h. Gase geringer Dichte bzw. hoher Schallgeschwindigkeit verwendet. So wird in der FR4783498 vorgeschlagen, durch das Ausströmen leichter Gase an den Rotorblättern eines Strahltriebwerks deren Luftschallabstrahlung zu minimieren. FR2783499 zeigt ein Verfahren auf, bei dem die bei Überschallflügen auftretenden Schockwellen am Triebwerkseinlauf sowie an den Vorderkanten der Flugzeugtragflächen durch das gezielte Ausströmen mit einem leichten Gas gemindert werden. In GB2271387 werden in einem Flugzeugstrahltriebwerk integrierte Resonatoren beschrieben, die mit einem leichten Gas gefüllt sind, wodurch die Resonator-Eigenfrequenzen und damit die Wirkung des Resonators gezielt beeinflußt werden. Neben diesen Verfahren, welche die akustischen Eigenschaften von Gasen niedriger Dichte nutzen, sind auch,noch Verfahren zur quantitativen Bestimmung von Gaseigenschaften mit akustischen Mitteln bekannt. So wird in der DE19745954 A1 ein Meßverfahren beschrieben, bei dem die Zusammensetzung von Gasen (z. B. für Narkoseanwendungen) akustisch ermittelt wird. Hierbei werden in dem zu messenden Gasgemisch Schalldruckschwingungen erzeugt und die Ausbreitungsgeschwindigkeit, die Schalldruckamplitude, die Frequenzänderungen oder andere akustische Größen des Gasraumes bestimmt und daraus die Gaszusammerisetzung abgeleitet.

Vor diesem Hintergrund war es Aufgabe der Erfindung, ein einfaches Meßverfahren zu entwickeln, mit dem der Luft- und der Körperschallanteil eines Motorengeräusches für jeden Betriebspunkt und jede Frequenz auf einfache Art qualitativ und quantitativ bestimmt werden kann.

Diese Aufgabe wird durch ein Meßverfahren mit den Merkmalen des Patentanspruchs 1 gelöst. Vorteilhafte Ausgestaltungen sind in den Unteransprüchen enthalten.

Erfindungsgemäß wird der gesamte Motorraum oder Teile desselben mit einem Medium geflutet, das eine deutlich andere Dichte bzw. Schallgeschwindigkeit als Luft besitzt. Zusätzlich kann dieses Medium auch in den Raum unterhalb des Motorraumes sowie unter den Fahrzeugboden eingebracht werden. Als Medium wird dabei vorzugsweise Helium, Wasserstoff, Xenon oder Sulfur Hexafluorid eingesetzt, es können aber auch andere Gase oder Gasgemische verwendet werden (bei der Verwendung von Wasserstoff oder anderen brennbaren oder explosiven Gasmischungen sind die entsprechende Sicherheitsvorschriften zu berücksichtigen). Helium z. B. besitzt eine um den Faktor drei höhere Schallgeschwindigkeit als Luft, die Schallgeschwindigkeit in Xenon und Sulfur Hexafluorid ist dagegen geringer als die der Luft. Durch die Flutung des Motorraumes mit einem dieser Gase verändern sich die akustischen Verhältnisse, d.h. die Luftraummoden verschieben sich bei Helium hin zu höheren Frequenzen, bei Xenon und Sulfur Hexafluorid zu tieferen Frequenzen. Dabei wird der vom Antriebsstrang abgestrahlte Luftschall sehr stark modifiziert, was auch im Fahrzeuginnenraum meßtechnisch erfaßbar ist. Bei Helium ist z. B. bei tiefen Frequenzen der Schalldruck i.d.R. geringer. Bei mittleren und hohen Frequenzen kann der Schalldruck jedoch auch ansteigen.

Wenn qualitativ entschieden werden soll, ob das Motorgeräusch im Fahrzeuginnenraum bei einer bestimmten Frequenz auch vom Luftschallanteil des Motorgeräusches beeinflußt wird oder hauptsächlich vom Körperschallanteil getragen wird, wird mindestens ein Mikrofon im Fahrzeuginnenraum zur Schallmessung installiert und die Schallsignale einer Auswerteeinheit übermittelt und dort analysiert (dies wird im weiteren Text vorausgesetzt und nicht mehr gesondert erwähnt). Falls nach dem Einfüllen des Mediums im Motorraum bei gegebenem Lastzustand und Drehzahl und einer bestimmten Frequenz bzw. über alle Frequenzen gemittelt bzw. kumuliert signifikante Schalldruckveränderungen im Fahrzeuginnenraum gemessen werden, kann daraus auf die Dominanz des Luftschallanteils des Motorgeräusches am Motorgeräusch im Fahrzeuginnenraum geschlossen werden. Falls nur geringfügige oder überhaupt keine Veränderungen des im Innenraum gemessenen Schalldruckes festgestellt werden, kann davon ausgegangen werden, daß der vom Motor in das Fahrzeug induzierte Körperschall dominant ist.

Für eine genauere, quantitative Analyse wird zusätzlich mit einem oder mehreren Mikrofonen der Luftschall im Motorraum vor, während und nach der Mediumflutung an einem oder mehreren charakteristischen Punkten gemessen (z. B. direkt an der motorseitigen der Stirnwand) sowie im Innenraum gemessen. Zur Kontrolle der Phase bzw. der Motordrehzahl kann auch noch das Drehzahlsignal oder die Beschleunigung des Motorblocks mitgemessen werden. Die mittlere Drehzahl kann auf einfache Art auch aus den im Fahrzeuginnenraum oder Motorraum gemessenen Schalldruck bestimmt werden. Die entsprechenden Analysetechniken sind bekannt.

Durch den Abfall bzw. den Anstieg der Schalldruckpegel im Motorraum und im Innenraum nach bzw. während der Mediumflutung kann für die einzelnen Frequenzen der Körperschall- bzw. Luftschallanteil im Innenraum berechnet werden. Eine Möglichkeit der Berechnung soll nachfolgend veranschaulicht werden. Es wird angenommen werden, daß ein Hochlauf eines Verbrennungsmotors im Stand im ausgekuppelten Zustand durchgeführt wird (d.h. keine Roll- oder Windgeräusche). Bei einem bestimmten Motorbetriebspunkt und einer ausgewählten Frequenz wird im Fahrzeuginnenraum der Gesamtschalldruckpegel $L_{ges}$ gemessen, der sich aus dem Luftschallanteil $L_L$ und dem Körperschallanteil $L_K$ des Motorengeräusches zusammensetzt. Unter der Annahme unkorrelierter Schalldrucksignale (d.h. es besteht keine feste Phasenbeziehung zwischen dem Schall im Motorraum und im Fahrzeuginnenraum) folgt der Gesamtschalldruck im Innenraum aus der intensitätsgerechten Addition des Luft- und des Körperschallanteils:

$$L_{ges} \doteq 10 \lg \left( 10^{\frac{L_L}{10}} + 10^{\frac{L_K}{10}} \right) \qquad\qquad (I)$$

Im Motorraum wird im Ausgangszustand der Luftschalldruckpegel $L_M$ gemessen. Nach der Mediumflutung wird im Motorraum ein um $\Delta L_M$ niedriger Schalldruckpegel gemessen. Dabei ist zuvor sicherzustellen, daß das Mikrofon auch in Helium und Luft entsprechend kalibriert ist (ggf. ist ein Spezialmikrofon zu benutzen). Unter der Vorraussetzung einer linearen Schalldruckübertragung zum Innenraum gilt, daß der Luftschallanteil des Motorgeräusches im Fahrzeuginnenraum ebenfalls um $\Delta L_L = \Delta L_M$ abnimmt, was bei der nachfolgenden Berechnung angenommen wird. Falls die Linearität der Luftschall-Übertragung nicht gelten sollte, ist eine entsprechende Korrekturfunktion zu ermitteln und bei der Ermittlung, von $\Delta L_L$ aus $\Delta L_M$ zu berücksichtigen bzw. die Übertragungsfunktion in beiden Zuständen, d.h. vor bzw. nach der Mediumflutung des Motorraumes zu bestimmen. Hierbei bietet es sich an, eine reziproke Messung (Schallanregung im Innenraum und Messung des Schallsignals im Motorraumes) durchzuführen. Weiterhin ist davon auszugehen, daß die Mediumflutung nicht den emittierten Körperschall des Motors bzw. die Körperschall-Übertragung in den Innenraum beeinflußt, d.h. $L_K$ bleibt vor und nach der Mediumflutung unverändert. Die folgende Formel beschreibt den Zustand im Fahrzeuginnenraum nach der Mediumflutung:

$$L_{ges} - \Delta L_{ges} = 10\lg\left(10^{\frac{L_L - \Delta L}{10}} + 10^{\frac{L_K}{10}}\right) \qquad (II)$$

Der Luftschallschalldruckpegel des Motorengeräusches im Innenraum ergibt sich nach Umformen der Gleichung zu:

$$L_L = 10\lg\left(10^{\frac{L_{ges}}{10}}\frac{1 - 10^{\frac{-\Delta L_{ges}}{10}}}{1 - 10^{\frac{-\Delta L_L}{10}}}\right) \qquad (III)$$

und der Körperschalldruckpegel des Motorehgeräusches im Innenraum folgt zu:

$$L_K = 10\lg\left(10^{\frac{L_{ges}}{10}} - 10^{\frac{L_L}{10}}\right) \qquad (IV)$$

Zur Veranschaulichung ein kurzes Beispiel: Der Gesamtschalldruckpegel im Innenraum betrage bei einer bestimmten Frequenz $L_{ges}$ = 90 dB. Nach der Mediumflutung nimmt im Motorraum der Schalldruckpegel bei der o.g. Frequenz um $\Delta L_L = \Delta L_M$ = 10 dB ab, im Fahrzeuginnenraum hingegen nimmt der Schalldruckpegel um 2 dB ab. Mit den obigen Formeln folgt der Luftschalldruckpegel $L_L$ = 86.1 dB und der Körperschalldruckpegel $L_K$ = 87.7 dB. Die Pegel bzw. die Schalldrücke oder die Schalleistungen können natürlich auch zueinander in Beziehung gesetzt werden um relative Aussagen zu erhalten. Analoge Berechnungen können natürlich auch für korrelierte Signale unter Berücksichtigung der Phasen des Motorraum- und des Innenraumschalldrucks ausgeführt werden. Die Genauigkeit des Meßverfahrens kann durch die Verwendung mehrere Mikrofone im Fahrzeuginnenraum (z.B. an den Ohrpositionen der einzelnen Passagiere auf den Vorder- und Rücksitzen) und/oder Motorraum noch gesteigert werden. Eine andere Möglichkeit die Genauigkeit des Meßverfahrens zu steigem ist, den Schalldruckpegel bei einem konstanten Betriebspunkt zu messen, während das Medium in den Motorraum gefüllt wird bzw. bei unterschiedlichen Medium-Konzentrationen zu messen und dann die Meßwerte zu vergleichen.

In einer weiteren vorteilhaften Ausgestaltung wird nicht nur der Motorraum selbst, sondem auch der Raum zwischen dem Motorraum und der Straße oder auch der gesamte Raum unter dem Fahrzeug oder um das Fahrzeug herum mit dem Medium angefüllt.

In einer Ausgestaltung zur Messung des Körperschall-Luftschallanteils am Innenraumgeräusch wird der Motorraum entweder abgedichtet oder mit einer Plane gasdicht eingepackt und danach das Medium in den sich ergebenden, abgeschlossenen Hohlraum eingefüllt.

In einer weiteren bevorzugten Ausgestaltung wird das Medium zusammen mit einem Schaum in den Motorraum eingebracht. Der Schaum dient dabei als Träger für das Medium, so daß das Medium nicht so leicht aus dem Motorraum entweichen kann. Zusätzlich wird durch diese Maßnahme die Luftschalldämpfung erhöht.

In einer weiteren bevorzugten Ausgestaltung wird das Medium in aus dünner Folie bestehende Pakete eingefüllt und in den Motorraum eingebracht. Die "Medium-Pakete" können aus praktischen Gesichtspunkten auch erst nach der Einbringung in den Motorraum durch dazu vorgesehene Ventile mit dem Medium befüllt werden. Zusätzlich zu dem Medium können in die Medium-Pakete auch noch zusätzliche absorbierende Materialien (Schaum, Stoff, Schaumkügelchen, Wolle oder ähnliches) eingebracht werden, um die Schalldämpfung zu erhöhen.

In einer weiteren vorteilhaften Ausgestaltung wird das Fahrzeug in einen geschlossenen Raum gebracht. Dieser Raum kann eine Testkammer oder aber auch ein gasdichtes Folienzelt, eine gasdichte Glocke oder ein ähnliches abgeschlossenes Volumen sein. Es entfällt somit die eventuell nötige Abdichtung des Motorraumes gegen den Verlust des Mediums. Auch besteht so die Möglichkeit nach Beendigung der Tests das Medium wieder abzusaugen und zu recyclen bzw. wiederzuverwenden.

Eine weitere vorteilhafte Ausgestaltung ergibt sich bei Verwendung von zusätzlichen Hohlraumschotten. Dabei werden im Motorraum freie Bereiche z. B. durch Bleche, Kunststoffplatten, schallharte Folien oder ähnliches abgetrennt. So wird eine zusätzliche Verstimmung der Motorraummoden erreicht.

Eine weitere Ausgestaltung sieht die Verwendung von Absorptionsmaterialien im Motorraum vor. Dazu werden Resonatoren, Dämpfungskeile, Schaumstoffelemente, dämpfende Folien oder ähnliches in den Motorraum eingebracht. Auch hier wird so die Luftschalldämpfung erhöht. Durch die Einbringung des Mediums in den Motorraum ändert sich auch die Luftschallabstrahlung in den Außenraum. Somit kann auf die oben beschriebene Weise z. B. auf einem Fahrzeugrollenprüfstand der Motorluftschallanteil am Gesamtaußengeräusch für verschiedene Lastzustände ermittelt werden.

Im folgenden wird die Erfindung anhand der Figuren beispielhaft näher erläutert.

Es zeigen:

Fig. 1 die schematische Darstellung eines Basis-Meßaufbaus
Fig. 2 die schematische Darstellung einer Messung mit Medium-Schaum
Fig. 3 die schematische Darstellung einer Messung mit Medium-Paketen
Fig. 4 die schematische Darstellung einer Messung mit Flutung des Außenraumes

In den Figuren werden folgende Bezeichnungen verwendet:
1: Fahrzeug; 2: Fahrzeuginnenraum; 3: Motorraum; 4: Motor; 5: Folie; 6,6': Mikrofone, 7: Mediumflasche, 8: Schlauch; 9: Medium; 10: Medium im Schaum; 11: Medium in Folien-Paketen; 12: Medium im Außenraum

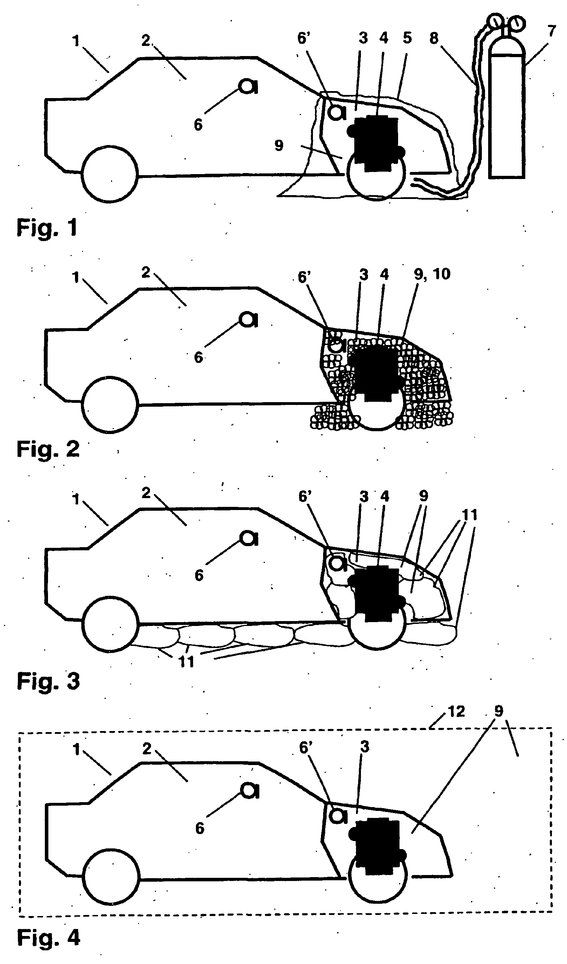

In Fig. 1 ist der grundsätzliche Aufbau für eine Messung mit einem Fahrzeug 1 mit Motor 3 dargestellt. Im Fahrzeuginnenraum 2 und im Motorraum 3 werden Mikrofone 6 und 6' installiert. Mit diesen Mikrofonen 6, 6' wird der Schall im Motorraum 3 und im Fahrzeuginnenraum 2 gemessen. Für die Messung ist der Motorraum 3 des Fahrzeugs 1 abzudichten (insbesondere die Spalten und Öffnungen an der Motorhaube, am Kühlergrill, zu den Seitentüren und den Radhäusem und zum Innenraum 2 hin), damit das Medium 9 nach der Einleitung nicht entweichen kann. Wird als Medium 9 Helium verwendet, so steigt es im Motorraum 3 nach oben, d.h. es ist keine Abdichtung nach unten zur Straßenseite notwendig. Günstig ist es jedoch, wenn man den Bereich zwischen Fahrzeug 1 und Strasse durch eine Folie 5 o.ä. abdichtet und somit eine Medium- bzw. Heliumbefüllung bis zur Straßenoberfläche gewährleistet. Es ist ebenfalls sinnvoll, den gesamten. Raum unter dem Fahrzeugboden zur Strasse hin mit dem Medium 9 zu fluten, um damit ebenfalls die Luftmoden unter dem Fahrzeug 1 zu, verstimmen. Dies ist insbesondere bei tiefen Frequenzen sinnvoll, wo die Wellenlängen in der ungefähren Größenordnung der Fahrzeugbreite bzw. -länge liegen. Für die Abdichtung bietet sich ebenfalls Folie an. Die Mediumbefüllung erfolgt einfach durch einen Schlauch 8 aus einer Mediumflasche 7. Prinzipiell ist das Medium 9 Helium leichter als Luft, daher kann man bei Verwendung dieses Mediums 9 den Schlauch 8 auf den Boden unter dem Motorraum 3 legen und das Medium 9 ausströmen lassen. Da sich Medien 9 wie Helium jedoch leicht mit Luft durchmischt, ist es u: U. auch sinnvoll, das Medium 9 - sofern es leichter ist als Luft - im oberen Teil des Motorraumes 3 ausströmen zu lassen, damit es die Luft allmählich aus dem Motorraum 3 verdrängt und dadurch die Durchmischung geringer ist. Die Mediumkonzentration im Motorraum 3 bzw. im Innenraum 2 kann - falls dies für die spätere Auswertung notwendig ist - durch handelsübliche Sensoren (z. B. Ultraschallsensoren) bestimmt werden. Die Messung kann für Hochläufe in Gangstellung "Neutral" auch im Freien ausgeführt werden. Vollast-Messungen mit Mediumflutung werden sinnvollerweise auf einem akustischen Fahrzeugrollenprüfstand durchgeführt: Die Gefährdung des Fahrers im Fahrzeuginnenraum 2 ist aufgrund der Ungiftigkeit des Heliums als sehr gering einzustufen. Dennoch sind genaue Erkundigungen einzuholen und ggf. sollten entsprechende Vorkehrungen (Sauerstoffmaske, Belüftung) getroffen werden. Auch bei anderen Medien 9 sind Sicherheitsvorschriften zu beachten. Alternativ kann die Gaspedalstellung oder Drosselklappenstellung auch extern gesteuert werden. Eine weitere Möglichkeit besteht darin, den Fahrzeuginnenraum 2 durch eine zusätzliche Belüftung unter einen geringen Überdruck zu setzen, so daß kein Medium 9 hineingelangen kann. Um die Modenverstimmung durch die Mediumflutung noch weiter zu verstärken, können zusätzlich dünne, akustisch harte Schottwände (z. B. aus Plastik o.ä., nicht abgebildet) in den Motorraum 3 eingebracht werden. Mediumfüllungen im Kofferraum, Schwellem und anderen Hohlräumen können auf ähnliche Weise durchgeführt werden und ebenfalls zur Bestimmung des Luft- bzw. Körperschallanteils genutzt werden. Bei der Messung sind u. U. Vorkehrungen zu treffen, daß der Motor 4 Luft und kein Medium 9 mit seinem Ansaugsystem ansaugt. Mit dem zusätzlichen Einbringen von Absorptionsmaterial, Resonatoren oder Dämpfungskeilen in oder unter dem Motorraum 3 kann die Luftschalldämpfung insbesondere im Bereich mittlerer und höherer Frequenzen wesentlich erhöht werden.

In Fig. 2 wird anstelle der Flutung mit Medium 9 ein Schaum 10 aus Medium 9 in den Motorraum 3 eingeführt. Dadurch wird zusätzlich eine deutlich erhöhte akustische Dämpfung des vom Motor 4 abgestrahlten Luftschalls erreicht.

Zudem wird eine Durchmischung des Mediums 9 mit der im Motorraum 3 befindlichen Luft nahezu verhindert. Auch die Abdichtung des Motorraumes 3 kann dadurch unter Umständen entfallen. Um dennoch an einer charakteristischen Stelle den Schalldruck zu messen, ist ein kleiner Hohlraum um das Mikrofon 6' vorzusehen.

In Fig. 3 werden mit Medium 9 gefüllte Folien-Pakete 11 in den Motorraum 3 eingefügt. Die gasdichten Folie-Pakete 11 sollten möglichst nicht knistern oder sonstigen Schall abstrahlen, unbrennbar und relativ reißfest sein. Die Folie selber kann auch dämpfend ausgeführt werden. Eine weitere Möglichkeit ist, daß die Folienpakete 11 auch noch zusätzlich mit einer dämpfenden Füllung (Stoff, Schaumkügelchen, Wolle oder ähnliches) ausgefüllt sind. Die Größe und Form der Folien-Pakete 11 ist so zu wählen, daß die Einbringung in und unter den Motorraum 3 leicht erfolgen kann und dieser dadurch möglichst gut ausgefüllt ist. Die Folien-Pakete 11 können auch noch mit einem Ventil ausgestattet sein, so daß eine Befüllung mit dem Medium 9 auch erfolgen kann, wenn die Folien-Pakete 11 bereits in den Motorraum 3 eingebracht wurden. Folien-Pakete 11 können auch noch zusätzlich unter das Fahrzeug 1 gelegt werden, um auch das akustische Modenfeld unter dem Fahrzeug 1 zu verstimmen.

In Fig. 4 wird anstelle des Motorraumes 3 der gesamte Außenraum 12 um das Fahrzeug 1 mit Medium geflutet. Dadurch wird der Aufwand zum Abdichten des Motorraumes 3 vermieden. Wird ein entsprechender Meßraum eingerichtet, so kann das Gas nach der Messung wieder abgesaugt und für die nächste Messung wiederverwendet werden oder werden. Alternativ kann auch eine gasdichte Glokke aus Kunststoffolie etc über das Fahrzeug gestülpt werden oder das Fahrzeug wird in ein Folienzelt gestellt. Für Medien, die schwerer als Luft sind, kann auch eine gasdichte (Folien-) Wanne benutzt werden.

**Patentansprüche**

1. Verfahren zur Bestimmung des Körperschall- und des Luftschallanteils eines Motorengeräusches im Fahrzeuginnenraum vor allem für Kraft- oder Elektrofahrzeuge (1) **gekennzeichnet durch** die Schritte:

   a) Messen des Schalls mit mindestens je einem Mikrofon (6, 6') im Motorraum(3) und im Innenraum des Fahrzeugs (1), wobei die Mikrofone (6, 6') mit mindestens einer Verstärker- und Auswerteeinheit verbunden sind,
   b) Flutung des Motorraumes (3) des Fahrzeuges (1) mit einem Medium (9), das deutlich andere akustische Eigenschaften als Luft aufweist, so dass die im Motorraum (3) vorhandene Luft **durch** das Medium (9) ersetzt wird,
   c) Messen des Schalls während sich das unter b) eingeleitete Medium (9) im Motorraum (3) befindet,
   d) Vergleich der Messungen von a) und c),

   so dass der Schall vor und zumindest nach der Mediumflutung gemessen wird.

2. Verfahren zur Bestimmung des Körperschall- und des Luftschallanteils eines Motorengeräusches nach Anspruch 1, **dadurch gekennzeichnet, daß** als Medium (9) ein Gas oder Gasgemisch verwendet wird.

3. Verfahren zur Bestimmung des Körperschall- und des Luftschallanteils eines Motorengeräusches nach Anspruch 1 oder 2 **dadurch gekennzeichnet, daß** das Medium (9) innerhalb des Motorraumes (3) und/oder unterhalb des Fahrzeuges (1) die vorhandene Luft ersetzt.

4. Verfahren zur Bestimmung des Körperschall- und des Luftschallanteils eines Motorengeräusches nach Anspruch 1 oder 2 **dadurch gekennzeichnet, daß** durch Einsatz einer gasdichten Folie (5) und/oder durch eine gasdichte Abdichtung des Motorraumes (3) ein Entweichen des Mediums (9) verhindert wird.

5. Verfahren zur Bestimmung des Körperschall- und des Luftschallanteils eines Motorengeräusches nach Anspruch 1 oder 2 **dadurch gekennzeichnet, daß** das Medium (9) in Form von mediumhaltigem Schaum (10) in den Motor raum (3) eingebracht wird.

6. Verfahren zur Bestimmung des Körperschall- und des Luftschallanteils eines Motorengeräusches nach Anspruch 1, 2 oder 3 **dadurch gekennzeichnet, daß**

das Medium (9) in Form von mediumhaltigen Paketen (11) in den Motorraum (3) und/oder unter dem Fahrzeug (1) eingebracht wird.

7. Verfahren zur Bestimmung des Körperschall- und des Luftschallanteils eines Motorengeräusches nach Anspruch 1, 2 oder 3
**dadurch gekennzeichnet, daß**
ein das Fahrzeug (1) umgebender Außenraum (12) oder eine das Fahrzeug (1) umgebende gasdichte Glocke oder ein gasdichtes Folienzelt mit Medium (9) geflutet wird.

8. Verfahren zur Bestimmung des Körperschall- und des Luftschallanteils eines Motorengeräusches nach einem der Ansprüche 1 bis 7
**dadurch gekennzeichnet, daß**
im Motorraum (3) zusätzliche Hohlraumschotte und/oder Bleche und/oder Kunststoffplatten und/oder schallharte Folien eingebracht werden.

9. Verfahren zur Bestimmung des Körperschall- und des Luftschallanteils eines Motorengeräusches nach einem der Ansprüche 1 bis 8
**dadurch gekennzeichnet, daß**
in den Motorraum (3) zusätzliche Absorptionsmaterialien und/oder Resonatoren und/oder Dämpfungskeile eingebracht werden.

**Claims**

1. Method for determining the solid-borne portion and the airborne portion of engine noise in the interior of a vehicle, especially for motor vehicles or electric vehicles (1), **characterized by** the steps:

   a) measurement of the sound using in each case at least one microphone (6, 6') in the engine compartment (3) and in the interior of the vehicle (1), the microphones (6, 6') being connected to at least one amplifier and evaluation unit,
   b) flooding of the engine compartment (3) of the vehicle (1) with a medium (9) which has clearly different acoustic properties than air so that the air present in the engine compartment (3) is replaced by the medium (9),
   c) measurement of the sound while the medium (9) introduced in b) is located in the engine compartment (3),
   d) comparison of the measurements of a) and c).

   so that the sound before and after the flooding of the medium is measured.

2. Method for determining the solid-borne portion and the airborne portion of engine noise according to Claim 1, **characterized in that**
   the medium (9) used is a gas or gas mixture

3. Method for determining the solid-borne portion and the airborne portion of engine noise according to Claim 1, **characterized in that**
   the medium (9) within the engine compartment (3) and/or underneath the vehicle (1) replaces the air present there.

4. Method for determining the solid-borne portion and the airborne portion of engine noise according to Claim 1 or 2, **characterized in that**
   the medium is prevented from escaping by the use of a gas-tight film (5) and/or by means of gas-tight sealing of the engine compartment (3).

5. Method for determining the solid-borne portion and the airborne portion of engine noise according to Claim 1, or 2, **characterized in that**
   the medium (9) is introduced into the engine compartment (3) in the form of medium-containing foam (10).

6. Method for determining the solid-borne portion and the airborne portion of engine noise according to Claims 1, 2 or 3, **characterized in that**
   the medium (9) is introduced into the engine compartment (3) and/or under the vehicle (1) in the form of bags (11) which are filled with medium.

**7.** Method for determining the solid-borne portion and the airborne portion of engine noise according to Claim 1, 2 or 3, **characterized in that**
an exterior space (12) which surrounds the vehicle (1) or a gas-tight bell which surrounds the vehicle (1) or a gas-tight film tent is flooded with medium (9).

**8.** Method for determining the solid-borne portion and the airborne portion of engine noise according to one of Claims 1 to 7, **characterized in that**
additional cavity bulkheads and/or metal sheets and/or plastic panels and/or reverberating films are introduced into the engine compartment (3).

**9.** Method for determining the solid-borne portion and the airborne portion of engine noise according to one of Claims 1 to 8, **characterized in that**
additional absorption materials and/or resonators and/or damping wedges are introduced into the engine compartment (3).

**Revendications**

**1.** Procédé en vue de la détermination de la proportion de bruit de structure et de bruit aérien d'un bruit de moteur à l'intérieur d'un véhicule avant tout pour des véhicules à moteur ou électriques (1) **caractérisé par** les étapes consistant à :

a) mesurer le bruit avec au moins à chaque fois un microphone (6, 6') dans l'espace moteur (3) et à l'intérieur du véhicule (1), les microphones (6, 6') étant reliés à au moins une unité amplificatrice et d'évaluation,
b) remplir l'espace moteur (3) du véhicule (1) d'un milieu (9) qui présente des propriétés acoustiques nettement différentes de l'air de sorte que l'air présent dans l'espace moteur (3) est remplacé par le milieu (9),
c) mesurer le bruit pendant que le milieu (9) introduit en b) se trouve dans l'espace moteur (3),
d) comparer les mesures de a) et c),

de sorte que le bruit avant et au moins après le remplissage de milieu est mesuré.

**2.** Procédé en vue de la détermination de la proportion de bruit de structure et de bruit aérien d'un bruit de moteur selon la revendication 1, **caractérisé en ce qu'**un gaz ou un mélange de gaz est utilisé comme milieu (9).

**3.** Procédé en vue de la détermination de la proportion de bruit de structure et de bruit aérien d'un bruit de moteur selon la revendication 1 ou 2, **caractérisé en ce que** le milieu (9) remplace l'air présent à l'intérieur de l'espace moteur (3) et/ou en dessous du véhicule (1).

**4.** Procédé en vue de la détermination de la proportion de bruit de structure et de bruit aérien d'un bruit de moteur selon la revendication 1 ou 2, **caractérisé en ce qu'**un échappement du milieu (9) est empêché par l'insertion d'une feuille étanche aux gaz (5) et/ou par une étanchéification étanche aux gaz de l'espace moteur (3).

**5.** Procédé en vue de la détermination de la proportion de bruit de structure et de bruit aérien d'un bruit de moteur selon la revendication 1 ou 2, **caractérisé en ce que** le milieu (9) est introduit sous la forme de mousse (10) contenant le milieu dans l'espace moteur (3).

**6.** Procédé en vue de la détermination de la proportion de bruit de structure et de bruit aérien d'un bruit de moteur selon la revendication 1, 2 ou 3, **caractérisé en ce que** le milieu (9) est introduit sous la forme de paquets (11) contenant le milieu dans l'espace moteur (3) et/ou sous le véhicule (1).

**7.** Procédé en vue de la détermination de la proportion de bruit de structure et de bruit aérien d'un bruit de moteur selon la revendication 1, 2 ou 3, **caractérisé en ce qu'**un espace externe (12) entourant le véhicule (1) ou une cloche étanche aux gaz entourant le véhicule (1) ou une tente en feuille étanche aux gaz est rempli de milieu (9).

**8.** Procédé en vue de la détermination de la proportion de bruit de structure et dé bruit aérien d'un bruit de moteur selon l'une quelconque des revendications 1 à 7, **caractérisé en ce que** des cloisons étanches d'espace creux et/ou des tôles et/ou des plaques en plastique et/ou des feuilles réverbérantes supplémentaires sont introduites dans l'espace moteur (3).

9. Procédé en vue de la détermination de la proportion de bruit de structure et de bruit aérien d'un bruit de moteur selon l'une quelconque des revendications 1 à 8, **caractérisé en ce que** des matériaux d'absorption et/ou des résonateurs et/ou des cales de compensation supplémentaires sont introduits dans l'espace moteur (3).

**Fig. 1**

**Fig. 2**

**Fig. 3**

**Fig. 4**